Europäisches Patentamt

(19) European Patent Office

Office européen des brevets

(11) Publication number: **0 177 077**
**B1**

(12) EUROPEAN PATENT SPECIFICATION

(45) Date of publication of patent specification: **28.12.88**

(21) Application number: **85201386.1**

(22) Date of filing: **02.09.85**

(51) Int. Cl.⁴: **C 12 G 3/04**

(54) A method of preparing a stable alcoholic beverage, on the basis of soured milk, having good keeping characteristics.

(30) Priority: **04.09.84 NL 8402696**

(43) Date of publication of application:
**09.04.86 Bulletin 86/15**

(45) Publication of the grant of the patent:
**28.12.88 Bulletin 88/52**

(84) Designated Contracting States:
**BE DE FR GB IT NL**

(56) References cited:
**EP-A-0 067 592**
**FR-A-2 360 666**

**JOURNAL OF THE SOCIETY OF DAIRY TECHNOLOGY, vol. 35, no. 2, April 1982, pages 41-43; W. BANKS et al.: "Formulation of cream-based liqueurs: a comparison of sucrose and sorbitol as the carbohydrate component"**

(73) Proprietor: **DMV-Campina B.V.**
**NCB Laan 68**
**NL-5462 GE Veghel (NL)**

(72) Inventor: **van de Hoven, Martinus Marinus G.M.**
**Mirtelaar 24**
**NL-5467 BJ Veghel (NL)**
Inventor: **Teppema, Pieter**
**Zeveneikenlaan 15**
**NL-5461 CE Veghel (NL)**
Inventor: **Ermens, Hermanus Wilhelmus Adrianus**
**Boortorenstraat 12**
**NL-5841 AR Oploo (NL)**

(74) Representative: **Urbanus, Henricus Maria, Ir. et al**
**c/o Vereenigde Octrooibureaux Nieuwe Parklaan 107**
**NL-2587 BP 's-Gravenhage (NL)**

## Description

This invention relates to a method of preparing stable alcoholic beverages on the basis of soured milk products having good keeping characteristics.

Many types of soured milk are known, differing in appearance, taste and flavour, depending on the way the milk is treated, the way of acidulation or fermentation, the presence or absence of flavour and acid producing organisms or the addition of flavouring substances like the admixture of fruit juice, fruit concentrate or fruit juice essence. The stability of protein and fat in an alcohol beverage on the basis of soured milk can present problems if the beverage is prepared by mixing alcohol to usual fermented milks. Special difficulties can occur if the drinks are carbonated to make them effervescent.

Difficulties increase if the fat content of the milk is raised.

In J. Soc. Dairy Technology 35, page 41—43 (1982) a single and a two-step process are described for the preparation of a cream liqueur with an increased shelf-life. The products obtained are obviously pH-neutral. Also EP—A—67.592 discloses a process for the preparation of a cream-based liqueur. During the mixing of the ingredients NaOH is thereby added to ensure an essentially neutral pH-value.

It is an object of the present invention to provide stable alcoholic beverages having a pleasant taste and having good keeping characteristics on the basis of a fat-containing soured milk product, which may or may not be mixed with fruit juice, fruit concentrate, or fruit essence.

According to the present invention, there is provided a method of preparing stable alcoholic beverages on the basis of soured milk and having good keeping characteristics, which comprises

a) making a soured milk or milk product enriched with fat, having a fat content of at least 4%;

b) mixing the resulting product, if desired, with water or a watercontaining liquid, and optionally with sugars, fruit juice, fruit concentrate, fruit essence, flavouring agents, colouring agents and/or thickening and stabilizing agents;

c) homogenizing the mixture in two stages at a pressure of between 180 and 250 bar and at a pressure of between 10 and 80 bar, respectively;

d) subjecting the mixture to a thermal treatment in which it is warmed-up to a temperature of between 45° and 55°C, while keeping the mass in motion and maintaining a temperature difference between the mass and a heating medium of no more than 10°C;

e) cooling the mixture to a temperature of between 25°C and 35°C;

f) re-homogenizing the mixture at said temperature of between 25° and 35°C;

g) subjecting the mass to a thermal treatment to thermize, pasteurize or sterilize the product;

h) adding carefully deaerated alcohol to the stable fermented product while keeping the mass in rapid motion, optionally in combination with, or followed by, the addition of flavour components; and

i) adjusting the pH of the liquid to the value desired for the end product.

The soured milk or milk-products can be made by conventional methods, by inoculating the milk with cultures of desired microorganisms and incubation at a suitable temperature. Cultures of living organisms can however present problems, they can become infected with phages, the proportions between different types of bacteria can change and other factors influence the production of flavour and the consistency and the resistance to alteration during processing.

So it can be advantageous to make the soured milk by adding a solution of an edible acid to milk or milk enriched with fat at a temperature below 5°C. Preferentially the temperature should not exceed 2°C. For acidulation citric acid, malic acid, fumaric acid, gluconic acid, glucono-delta-lactone, lactic acid in pure form, in mixtures or as a concentrated fermentation fluid can be used. Specific flavours can be accentuated by addition of natural or nature-identical flavours.

In the method according to the invention, we preferably use a milk product having a fat content of 4—20%, most preferably 4—10%.

The method according to the invention is particularly satisfactory if the mixing ratios are selected so as to produce a beverage having a fat content of between 1 and 12% by weight and an alcohol content of between 0.5 and 19% by weight.

The method according to the invention is productive of a beverage suiting the requirements made extremely well, if the pH is adjusted to a value of between 3.5 and 5.0.

According to the invention it is possible to obtain beverages with a stable flavour and taste. In the case of low alcohol contents microbiological alterations might be feared. To prevent this the product can be finally subjected to a thermal treatment to thermize, pasteurize or sterilize it before, during or after bottling.

The invention is illustrated in and by the following examples.

Example 1

736 kg whole milk, having a fat content of 3.5%, was adjusted to a fat content of 10.5% by means of 264 kg cream containing 35% fat. This mixture was homogenized at a pressure of 200 bar, pasteurized for 180 seconds at 98°C, and cooled to 30°C. At this temperature, the mixture was inoculated with 0.25 kg IST culture (a standard culture of Streptococcus thermophilus and Lactobacillus bulgaricus, supplied by Nizo at Ede, The Netherlands), and fermented until a pH value of 4.2 was reached.

Subsequently, the mixture was cooled to 15°C and mixed with 70 kg saccharose, 10 kg glucose and 264.5 kg water in which were dissolved 2 kg citruspectin and 3.5 kg orange essence.

When the ingredients were thoroughly mixed, the mixture was homogenized in two stages at pressures of 220 bar and 20 bar, whereafter the temperature of the mass was increased, while causing the mass of flow, to 52°C, maintaining a temperature difference between product and heating medium of 8°C. Immediately after reaching this temperature, the mixture was, still flowing, cooled to a temperature of 32°C, maintaining a temperature difference between product and cooling medium of 8°C. The product was subsequently subjected to a heat treatment at 90°C for 60 seconds and cooled to 15°C. At this temperature it was mixed with 150 kg previously carefully deaerated alcohol with an alcohol content of 80% by weight, whereafter the pH of the beverage was adjusted with food grade citric acid to 4.1.

The yoghurt liqueur thus produced had a fresh taste, a fat content of 7.0% and alcohol content of 8.0%, and after storage for 6 months at a temperature of 20°C had fully retained its original structure and taste.

Example 2

The preparation of the beverage as described in Example 1 was repeated, but after the addition of the alcohol and adjusting the pH value to 4.1, carbon dioxide gas was introduced into the beverage under pressure. Thereafter the beverage was bottled, and bottles were sealed gas-tight.

The result was an extremely sparkling beverage which, after storage at 20°C for six months did not show any deterioration in quality.

Example 3

The procedure of Example 1 was followed, but the milk was mixed with 350 kg aqueous solution containing 80 kg saccharose, 10 kg glucose and 1.5 kg pectin. When the liquid had subsequently been subjected to the thermal and homogenization treatments and cooled to 15°C, it was mixed with a mixture of 150 kg deaerated alcohol with an alcohol content of 80% by weight and 12.5 kg concentrated maracuja nectar, whereafter the pH was adjusted to 4.3. Thereafter carbon dioxide was introduced into the beverage at a pressure of 1.2 bar, and the beverage was packed in a gas-tight manner.

The ready beverage contained 6.9% fat and 7.9% alcohol. After storage at room temperature for 6 months, no deterioration was found as regards either structure or organoleptic properties.

Example 4

385 kg skim milk of 0.1% fat and 615 kg cream having a fat content of 30.0% were mixed to produce a fat content of 18.5%. Subsequently the milk was mixed with 50 kg saccharose and 10 kg glucose, homogenized at a pressure of 200 bar and pasteurized at 98°C for 180 seconds.

After cooling to 30°C the milk was subjected to fermentation with 0.5 kg starter comprising equal quantities of *Streptococcus lactis* and *Streptococcus cremoris*. The fermentation was terminated as soon as a pH value of 5.0 was reached.

Subsequently, 263.5 kg water, 1.5 kg pectin and 100 kg cherry juice were added. After being subjected to the homogenization and thermal treatments as described in Example 1, the mixture was cooled to 15°C and mixed with 353.5 kg 50% well-deaerated alcohol. After adjusting the pH to 4.5, introducing carbon dioxide gas at a pressure of 2.2 bar, the beverage was packed in a gas-tight manner. The ready beverage contained 10.4% fat and 9.9% alcohol.

Example 5

752 kg sweet butter milk with a fat content of 0.4% was mixed with 247 kg cream with a fat content of 30%. The resulting mixture had a fat content of 7.7% and was treated in accordance with Example 3, except that, after fermentation, homogenization, thermal treatments and cooling to 15°C, it was mixed with 150 kg well deaerated 80% alcohol and 40 kg passion-fruit concentrate, whereafter the pH was adjusted to 4.5. The resulting beverage was also treated with carbon dioxide and was packed in bottles in a gas-tight manner. The beverage had a fat content of 5.0% and an alcohol content of 8.8%.

Example 6

785 kg milk with a fat content of 3.8% was carefully mixed with 215 kg cream having a fat content of 30%. Thus enriched, the milk had a fat content of 9.4%.

This cream was subjected to a two-stage homogenization at 250 and 50 bar, subsequently, flowing in a plate-type heat exchanger, using a temperature difference of 8°C, warmed-up to 73°C and immediately thereafter rehomogenized at 180 and 35 bar, pasteurized for 3 minutes at 9.8°C and cooled to 2°C. At this temperature the mixture was soured by addition of a 25% solution of lactic acid until a pH-value of 4.1 was reached.

Subsequently, the mixture was mixed with 70 kg saccharose, 10 kg glucose and 264.5 kg water in which were dissolved 7 kg citruspectin. The soured cream was subjected to a two-stage homogenization at 250 and 50 bar, subsequently, flowing in a plate-type heat exchanger, using a temperature difference of 8°C, warmed up to 52°C and immediately thereafter cooled in a heat exchanger to 32°C, using a temperature difference of 8°C, at which the mixture was rehomogenized at the said pressures. The product was subsequently subjected to a heat treatment at 90°C for 60 seconds and cooled to 15°C. At this temperature it was mixed with a deaerated mixture of 60 kg 50% alcohol, 40 kg passion fruit concentrate, 170 kg saccharose and 378.5 kg water. After adjustment to pH 3.8 carbon dioxide was introduced in the conventional manner. The product containing 4.7% fat and 1.5% alcohol was bottled and pasteurized for 15 minutes at 65°C.

After storage for 2 months it was found to have fully retained its original taste character and appearance and its original physical structure.

Example 7

The procedure of Example 6 was followed, but instead of a mixture of 70 kg saccharose, 10 kg glucose and 264.5 kg water, a concentrated hydrolized whey concentrate was used. The beverage had virtually the same sweetness as that described in Example 5; its fat content was 4.7% and its alcohol content 1.5%. Here again, after storage at 25°C for 2 months, no change was to be noted.

Example 8

The procedure of Example 6 was followed, but instead of 70 kg saccharose and 10 kg glucose, 80 kg mannitol was incorporated as a sugar substitute. The cream was soured to pH 5.0. Furthermore a CMC-derivate was used instead of pectin as the stabilized. The result was analogous to that of Examples 6 and 7.

Example 9

868 kg milk with a fat content of 3.5% was mixed with 132 kg cream containing 30% fat. This mixture had a fat content of 7.0%.

After the souring and stabilizing process of Example 6, a mixture of 500 kg fortified wine, 120 kg saccharose and 91.5 kg orange flavour concentrate was added.

This product containing 3.5% fat and 12% alcohol after 3 month storage in the dark, did not show any deterioration in taste and physical structure.

Example 10

The procedure of Example 9 was followed but instead of lactic acid, a mixture of citric acid and malic acid was used for souring the cream. After storage of 3 months in the dark the product did not show any deterioration in taste and physical structure.

**Claims**

1. A method of preparing a stable alcoholic beverage on the basis of soured milk products and having good keeping characteristics, which comprises
a) making a soured milk or milkproduct enriched with fat, having a fat content of at least 4%;
b) mixing the resulting product, as desired, with water or a water-containing liquid, and optionally with sugars, fruit juice, fruit concentrate, fruit essence, flavouring agents, colouring agents and/or thickening and stabilizing agents;
c) homogenizing the mixture in two stages at a pressure of between 180 and 250 bar and at a pressure of between 10 and 80 bar, respectively;
d) subjecting the mixture to a thermal treatment in which it is warmed-up to a temperature of between 45° and 55°C, while keeping the mass in motion and maintaining a temperature difference between the mass and a heating medium of no more than 10°C;

e) cooling the mixture to a temperature of between 25° and 35°C;
f) re-homogenizing the mixture at said temperature of between 25° and 35°C;
g) subjecting the mass to a thermal treatment to thermize, pasteurize or sterilize the product;
h) adding carefully deaerated alcohol to the stable fermented product while keeping the mass in rapid motion, optionally in combination with, or followed by, the addition of flavour components; and
i) adjusting the pH of the liquid to the value desired for the end product.

2. A method according to claim 1, wherein the soured milk or milkproduct enriched with fat in step a) is made by a process comprising
k) mixing milk or skim milk with cream to a desired fat content;
l) homogenizing the mixture in two stages at a pressure of between 180 and 250 bar and at a pressure of between 10 and 80 bar respectively;
m) subjecting the mixture to a thermal treatment in which it is warmed up to a temperature of between 45°C and 55°C, while keeping the mass in motion and maintaining a temperature difference between the mass and a heating medium of no more than 10°C;
n) cooling the mixture to a temperature of between 25°C and 35°C;
o) re-homogenizing the mixture at said temperature of between 25°C and 35°C;
p) subjecting the mass to a thermal treatment to thermize, pasteurize or sterilize the product;
q) souring the mixture by fermentation or by addition of acid.

3. A method according to claim 1, wherein the soured milk or milkproduct in step a) is made by fermenting milk or milk enriched with fat by inoculation with a suitable culture or mixture of cultures of micro-organisms and incubation at a suitable temperature.

4. A method according to claim 1, wherein the soured milk or milkproduct in step a) is made by adding a solution of an edible acid to milk or milkproduct enriched with fat at a temperature below 5°C.

5. A method according to claim 4, wherein the temperature at the addition is below 2°C.

6. A method according to claim 4, wherein the edible acid is chosen from the group of lactic acid, citric acid, malic acid, fumaric acid, gluconic acid, glucono-delta-lactone in pure form, as a mixture or as a concentrated fermentation fluid.

7. A method according to claim 1, which comprises carbonating the beverage.

8. A method according to claim 1, wherein the starting product in step a) is milk, or milk enriched with fat, having a fat content of between 4 and 20%.

9. A method according to claim 1, wherein the ratio between milk, alcohol and other ingredients is so selected as to produce a beverage having a fat content of between 1 and 12% by weight and an alcohol content of between 0.5 and 19% by weight.

10. A method according to claim 1, wherein the pH of the product is ultimately adjusted to a value of between 3.5 and 5.0.

11. A method according to claim 1, wherein the product is finally subjected to a thermal treatment to thermize, pasteurize or sterilize it before, during or after bottling.

## Patentansprüche

1. Verfahren zur Herstellung eines stabilen alkoholischen Getränks auf der Basis gesäuerter Milchprodukte sowie mit guten Lagereigenschaften, welches umfaßt

a) Herstellung einer gesäuerten Milch oder eines gesäuerten Milchproduktes, die mit Fett angereichert sind und einen Fettgehalt von wenigstens 4% haben;

b) Vermischen des sich ergebenden Produktes nach Wunsch mit Wasser oder einer Wasser enthaltenden Flüssigkeit sowie wahlweise mit Zuckern, Fruchtsaft, Fruchtkonzentrat, Fruchtessenz, Geschmacksstoffen, Farbstoffen und/oder Verdickungsmitteln und Stabilisatoren;

c) Homogenisieren der Mischung in zwei Stufen mit einem Druck zwischen 180 und 250 bar bzw. einem Druck zwischen 10 und 80 bar;

d) Wärmebehandlung der Mischung, bei der sie auf eine Temperatur zwischen 45° und 55°C erwärmt wird, während die Masse in Bewegung gehalten und eine Temperaturdifferenz zwischen der Masse und einem Heizmedium von nicht mehr als 10°C aufrechterhalten wird;

e) Kühlen der Mischung auf eine Temperatur zwischen 25°C und 35°C;

f) erneutes Homogenisieren der Mischung bei der Temperatur zwischen 25°C und 35°C;

g) thermische Behandlung zur Kurzzeiterhitzung, Pasteurisierung und Sterilisierung des Produkts;

h) Zugeben von sorgfältig entlüftetem Alkohol zu dem stabilen fermentierten Produkt, während die Masse in rascher Bewegung erhalten wird, wahlweise in Kombination mit oder mit nachträglicher Zugabe von Geschmackskomponente; und i) Einstellen des pH-Wertes der Flüssigkeit auf den für das Endprodukt gewünschten Wert.

2. Verfahren laut Anspruch 1, nach dem die mit Fett angereicherte gesäuerte Milch oder das mit Fett angereicherte gesäuerte Milchprodukt gemäß ach einem Verfahren gewonnen wird, welches umfaßt

k) Mischen der Milch oder der entrahmten Milch mit Sahne auf einen gewünschten Fettgehalt;

l) Homogenisieren der Mischung in zwei Stufen bei einem Druck zwischen 180 und 250 bar bzw. einem Druck zwischen 10 und 80 bar;

m) Wärmebehandlung der Mischung, bei der sie auf eine Temperatur zwischen 45°C und 55°C aufgewärmt und die Masse in Bewegung gehalten und eine Temperaturdifferenz zwischen der Masse und dem Heizmedium von nicht mehr als 10°C aufrechterhalten wird;

n) Abkühlen der Mischung auf eine Temperatur zwischen 25°C und 35°C;

o) erneutes Homogenisieren der Mischung bei der Temperatur zwischen 25°C und 35°C;

p) Wärmebehandlung der Masse zur Kurzzeiterhitzung, Pasteurisierung, oder Sterilisierung des Produkts;

q) Ansäuern der Mischung durch Fermentierung oder durch Säurezugabe.

3. Verfahren laut Anspruch 1, nach dem die gesäuerte Milch oder das gesäuerte Milchprodukt gemäss a) durch Fermentierung der Milch oder der mit Fett angereicherten Milch durch Impfen mit einer geeigneten Kultur oder Kulturmischung von Mikroorganismen und Inkubation bei einer geeigneten Temperatur gewonnen werden.

4. Verfahren laut Anspruch 1, nach dem die gesäuerte Milch oder das gesäuerte Milchprodukt gemäß a) durch Zugabe einer Lösung einer genießbaren Säure zu der Milch oder dem mit Fett angereicherten Milchprodukt bei einer Temperatur von unter 5°C gewonnen wird.

5. Verfahren laut Anspruch 4, nach dem die Temperatur der Zugabe unterhalb von 2°C liegt.

6. Verfahren laut Anspruch 4, nach dem die genießbare Säure aus einer Gruppe von Stoffen gewählt wird, zu der Milchsäure, Zitronensäure, Apfelsäure, Fumarsäure, Glukonsäure, Glukono-Delta-Lakton gehören in reiner Form als eine Mischung oder als eine konzentrierte Fermentationsflüssigkeit.

7. Verfahren laut Anspruch 1, nach dem das Getränk mit Kohlendioxyd versetzt wird.

8. Verfahren laut Anspruch 1, nach dem das Ausgangsprodukt für a) Milch oder mit Fett angereicherte Milch ist, die einen Fettgehalt zwischen 4 und 20% besitzt.

9. Verfahren laut Anspruch 1, nach dem das Verhältnis zwischen Milch, Alkohol und anderen Inhaltsstoffen so gewählt wird, daß ein Getränk mit einem Fettgehalt zwischen 1 und 12 Gew% und einem Alkoholgehalt von zwischen 0,5 und 19 Gew% erhalten wird.

10. Verfahren laut Anspruch 1, nach dem der pH-Wert des Produktes am Ende auf einen Wert zwischen 3,5 und 5,0 eingestellt wird.

11. Verfahren laut Anspruch 1, nach dem das Produkt schliesslich einer thermischen Behandlung zur Kurzzeiterhitzung, Pasteurisierung oder Sterilisierung vor oder während des Abfüllens auf Flaschen unterworfen wird.

## Revendications

1. Procédé de préparation d'une boisson alcoolisée stable à base de produits laitiers acidifiés et présentant de bonnes caractéristiques de conservation, qui comprend:

a) la préparation d'un lait ou produit laitier acidifié enrichi en matières grasses, ayant une teneur en matières grasses d'au moins 4%;

b) le mélange du produit résultant, selon les souhaits, avec de l'eau ou un liquide contenant de l'eau, et éventuellement avec des sucres, du jus de fruits, du concentré de fruits, de l'extrait de fruits, des agents aromatisants, des agents colorants et/ou des agents épaississants et stabilisants;

c) l'homogénéisation du mélange en deux étapes à une pression comprise entre 180 et 250 bars et à une pression comprise entre 10 et 80 bars, respectivement;

d) la soumission du mélange à un traitement thermique dans lequel il est chauffé à une température comprise entre 45 et 55°C, tout en maintenant la masse en mouvement et en maintenant une différence de température non supérieure à 10°C entre la masse et un milieu chauffant;

e) le refroidissement du mélange à une température comprise entre 25 et 35°C;

f) la réhomogénéisation du mélange à ladite température comprise entre 25 et 35°C;

g) la soumission de la masse à un traitement thermique pour thermiser, pasteuriser ou stériliser le produit;

h) l'addition d'alcool soigneusement désaéré au produit fermenté stable tout en maintenant la masse en mouvement rapide, éventuellement en combinaison avec, ou suivi par, l'addition de constituants aromatisants; et

i) l'ajustement du pH du liquide à la valeur souhaitée pour le produit final.

2. Procédé selon la revendication 1, dans lequel le lait ou produit laitier acidifié enrichi en matières grasses à l'étape a) est préparé par un procédé comprenant:

k) le mélange du lait ou du lait écrémé avec de la crème jusqu'à une teneur en matières grasses souhaitée;

l) l'homogénéisation du mélange en deux étapes à une pression comprise entre 180 et 250 bars et à une pression comprise entre 10 et 80 bars respectivement;

m) la soumission du mélange à un traitement thermique dans lequel il est chauffé à une température comprise entre 45°C et 55°C, tout en maintenant la masse en mouvement et en maintenant une différence de température entre la masse et un milieu chauffant non supérieure à 10°C;

n) le refroidissement du mélange à une température comprise entre 25°C et 35°C;

o) la réhomogénéisation du mélange à ladite température comprise entre 25°C et 35°C;

p) la soumission de la masse à un traitement thermique pour thermiser, pasteuriser ou stériliser le produit;

q) l'acidification du mélange par fermentation ou par addition d'acide.

3. Procédé selon la revendication 1, dans lequel le lait ou produit laitier acidifié à l'étape a) est préparé par fermentation du lait ou du lait enrichi en matières grasses par inoculation d'une culture appropriée ou d'un mélange de cultures appropriées de micro-organismes et incubation à une température appropriée.

4. Procédé selon la revendication 1, dans lequel le lait ou produit laitier acidifié à l'étape a) et préparé par addition au lait ou au produit laitier enrichi en matières grasses d'une solution d'acide comestible à une température inférieure à 5°C.

5. Procédé selon la revendication 4, dans lequel la température lors de l'addition est inférieure à 2°C.

6. Procédé selon la revendication 4, dans lequel l'acide comestible est choisi dans le groupe de l'acide lactique, l'acide citrique, l'acide malique, l'acide fumarique, l'acide gluconique, la glucono-delta-lactone, sous forme pure, d'un mélange ou sous forme d'un fluide de fermentation concentré.

7. Procédé selon la revendication 1, qui comprend l'addition d'acide carbonique à la boisson.

8. Procédé selon la revendication 1, dans lequel le produit de départ à l'étape a) et le lait ou un lait enrichi en matières grasses, ayant une teneur en matières grasses comprise entre 4 et 20%.

9. Procédé selon la revendication 1, dans lequel le rapport entre le lait, l'alcool et d'autres ingrédients est choisi de façon à produire une boisson ayant une teneur en matières grasses comprise entre 1 et 12% en poids et une teneur en alcool comprise entre 0,5 et 19% en poids.

10. Procédé selon la revendication 1, dans lequel le pH du produit est ajusté finalement à une valeur comprise entre 3,5 et 5.

11. Procédé selon la revendication 1, dans lequel le produit est finalement soumis à un traitement thermique pour le thermiser, le pasteuriser ou le stériliser avant, pendant ou après la mise en bouteilles.